# EUROPEAN PATENT APPLICATION

(11) **EP 4 383 683 A1**
(43) Date of publication of application: **12.06.2024**
(21) Application number: 22212235.0
(22) Date of filing: 08.12.2022
(51) Int. Cl.: H04L 67/12, H04L 67/52

(54) **SATELLITE-BASED INDUSTRIAL DEVICE VALIDATION METHOD AND SYSTEM.**

(71) Applicant: Siemens Aktiengesellschaft, 80333 München (DE)
(72) Inventor: Sauer, Markus, 81739 München (DE); Zeiger, Florian, 85635 Höhenkirchen-Siegertsbrunn (DE)
(74) Representative: Siemens Patent Attorneys

(57) **Abstract**

The invention is concerned with a method to operate a system (1), comprising an industrial device (2) and a satellite based validation system (3). The method comprises the steps of: sending a request signal (11), comprising a function-related request (6) to request an unlocking of a particular function (5) of the industrial device (2) to the satellite based validation system (3) by the industrial device (2); validating the function-related request (6) according to a predefined validation process by the satellite based validation system (3); upon confirmation of a validity of the function-related request (6), sending a response signal (19) comprising a positive response (20) corresponding to the function-related request (6), to the industrial device (2) by the satellite based validation system (3); and upon reading of the positive response (20) by the industrial device (2), execution of the particular function (5) by the industrial device (2).

## Description

Independent of the grammatical term usage, individuals with male, female or other gender identities are included within the term.

The invention is concerned with a method to operate a system, an industrial device, a satellite based validation system and a system comprising an industrial device and a satellite based validation system.

Legal contracts regarding the delivery and operation of industrial devices and complete solutions today typically also contain rules and agreements regarding the constraints under which these systems are allowed to be used and operated. This typically relates to export customs, controls, legal regulations, but also service and maintenance agreements regarding operational guarantees like a percentage of function availability over the curse of a year without interruption. An example for such an operational constraint is a defined spatial area where it is allowed to operate the asset. Currently there are no known solutions, which allow the automated enforcement of such spatial constraints, and which are tamper-proof. All potential solutions heavily rely on local communication infrastructure and/or the integration of localization sensors into the industrial devices. Thus, asset and operational policy tracking is still a manual process, where auditors travel around the world to validate the compliance to agreed usage of functions.

It is an object of the present invention to provide a solution to ensure compliance of a use of industrial devices with regulations.

This objective is achieved by the respective subject matter of the independent claims. Further implementations and preferred embodiments are subject matter of the dependent claims.

The proposed system of this invention disclosure approaches these challenges by providing a way to track operation in compliance with a spatial location agreement through usage of space-based edge cloud systems, and secure storage elements in the industrial devices without the need for an on premise tracking and localization infrastructure.

A first aspect of the invention is related to a method to operate a system. The system comprises an industrial device and a satellite-based validation system. The industrial device may comprise a control unit. The industrial device may be configured to execute predefined functions. The functions may comprise industrial functions like a controlling of a motor, a performance of analytics, an operation of an autonomous factory or an operation of an autonomous energy supply system. The functions provided by said industrial device may depend on rights of the industrial device to execute the respective function. Therefore, the execution of the functions may be restricted. It may be possible that at least one predefined function of the industrial device may be locked by default. In other words, in order to execute the respective function by the industrial device, it is necessary to unlock the respective function.

The method comprises a step of sending a request signal, comprising a function-related request to request an unlocking of the particular function of the industrial device for at least a predetermined period of time to a satellite-based validation system by the industrial device. In other words, the industrial device sends the request signal to the satellite-based validation system. The request signal comprises the function-related request to unlock the particular function of the industrial device. The unlocking of the particular function is performed by the satellite-based validation system. The unlocking may be unlimited or restricted to a predetermined period of time. In other words, in order to execute the particular function by the industrial device, the particular function has to be unlocked by the satellite-based validation system.

A next step comprises a receiving of the request signal by the satellite-based validation system. The request signal may be received by a satellite device of the satellite-based validation system.

A next step comprises a validating of the function-related request according to a predefined validation process by the satellite-based validation system. In other words, the function-related request is validated by the satellite-based validation system in order to determine whether the function-related request of the unlocking of the particular function of the industrial device is allowed.

Upon confirmation of a validity of the function-related request, a response signal comprising a positive response corresponding to the function-related request is sent to the industrial device by the satellite-based validation system. In other words, in case the function-related request is evaluated as valid by the satellite-based validation system according to the predefined validation process, the positive response is sent to the industrial device by the satellite-based validation system. The positive response may comprise a code to unlock the particular function of the industrial device.

The request signal is received by the industrial device.

Upon reading of the positive response by the industrial device, the particular function is unlocked and executed by the industrial device for at least the predetermined period of time. In other words, the particular function is unlocked by means of the positive response, and the particular function is executed by the industrial device.

The invention has the advantage that an unlocking of a particular function does not require a terrestic connection to a central computer device and/or any further infrastructure related to the locking mechanism.

According to a further embodiment of the invention, the method comprises a step of locating a geographical location of the industrial device based on at least one predefined characteristic of the request signal by the satellite-based validation system. In other words, the geographical location of the industrial device is located by the satellite-based validation system by means of the at least one predefined characteristic of the request signal. In other words, as the request signal is sent by the industrial device, it is possible to locate the geographical location of the industrial device by determining a source of the request signal. The embodiment has the advantage that it is possible to locate a current location of the industrial device by the satellite-based validation system. Therefore, it is not possible to pretend a geographical location of the industrial device in order to bypass local restrictions.

According to a further embodiment of the invention, the predefined validation process comprises a validation of the geographical location of the industrial device in relation to predefined geographical regulations saved in a local permission store of the satellite-based validation system, regarding the execution of the particular function by the industrial device. In other words, geographical constraints of the use of the particular function are defined by the predefined geographical regulations. The predefined geographical regulations are stored in a local permission store of the satellite-based validation system. The local permission store may be designed as a data store of the satellite-based validation system configured to provide the predefined geographical regulations. The predefined geographical regulations may give constraints regarding the execution of the particular function depending on the geographical location of the industrial device. The confirmation of the validity of the function-related request requires a compatibility of the geographical location of the execution of the particular function by the industrial device with the predefined geographical regulations. In other words, the satellite-based validation system verifies whether the industrial device is allowed to execute the particular function at the geographical location according to the predefined geographical regulations. To evaluate the request to execute the particular function as valid, it is necessary that the execution of the particular function by the industrial device at the geographical location of the industrial device is allowed according to the predefined geographical regulations. The embodiment has the advantage that it is possible to limit the use of specific functions of the industrial device to predefined geographical locations.

According to a further embodiment of the invention, the predefined validation process comprises a validation of the geographical location of the industrial device in relation to predefined geographical regulations saved in a local permission store of the satellite-based validation system, regarding the geographical location of the industrial device. In other words, during the predefined validation process the satellite-based validation system verifies that the industrial device is at a valid geographical location. Valid geographical locations of the industrial device may be given by the predefined geographical regulations.

The confirmation of the validity of the function-related request requires a compatibility of the estimated geographical location of the industrial device with the predefined geographical regulations. In other words, it is necessary for a positive response that the industrial device is at a geographical location that complies with the predefined geographical regulations.

According to a further embodiment of the invention, the function-related request comprises a location identifier of the industrial device identifying a geographical location of the industrial device. In other words, the industrial device generates the function-related request wherein the function-related request comprises the location identifier of the industrial device. The location identifier identifies the geographical location of the industrial device. In other words, the location identifier may be linked with a specific position or a geographical region.

The predefined validation process comprises a validation of the geographical location of the industrial device in relation to the geographical location of the industrial device according to the location identifier. In other words, during the predefined validation process the geographical location of the industrial device, located by the satellite-based validation system is compared with the geographical location of the industrial device according to the location identifier. In other words, during the predefined validation process a compatibility of the geographical location of the industrial device with the location identifier is verified.

The confirmation of the validity of the function-related request, requires a compatibility of the estimated geographical location of the industrial device with the geographical location of the industrial device according to the location identifier. In other words, in order to evaluate the request as valid, it is necessary that the geographical location, identified by the location identifier of the function-related request complies with the geographical location of the industrial device located by the satellite-based validation system.

According to a further embodiment of the invention, the function-related request comprises a device identifier of the industrial device identifying the particular industrial device.

In other words, the industrial device sends the request signal comprising the function-related request wherein the function-related request comprises the device identifier. The device identifier may comprise a code, a signature or another feature that allows an identification of the specific industrial device sending the request signal.

The predefined validation process comprises a validation of the device identifier of the industrial device in relation to predefined device rights of a local permission store regarding the device identifier of the industrial device. In other words, in the predefined validation process the satellite-based validation system verifies that the particular industrial device identified by means of the device identifier is allowed to execute the particular function according to the predefined device rights. The confirmation of the validity of the function-related request requires a compatibility of the device identifier of the industrial device with the predefined device rights of the device identifier of the industrial device. In other words, in order to generate a positive response, it is necessary that the industrial device of the device identifier is allowed to execute the particular function according to the predefined device rights.

According to a further embodiment of the invention, the device identifier of the industrial device is saved in a secure policy store of the industrial device. In other words, the industrial device comprises a secure policy store. The device identifier may be provided by the secure policy store of the industrial device. The invention has the advantage that the device identifier is saved in a device with limited functions. Therefore, it is not possible to change, to overwrite or to read the device identifier of the industrial device in order to manipulate the validation of a request to perform a particular function.

According to a further embodiment of the invention, the method comprises the steps of repeating the steps during execution of the function until a predefined task of the execution has finished by the industrial device. In other words, during the execution of the function, the industrial device repeats the sending of the request signal in order to request a continuation of the execution of the particular function until the predefined task is finished. In other words, as the execution of the function may be limited to a predefined time period, it may be necessary to renew the unlocking of the particular function in case the predefined task takes more time than the predefined time period.

According to a further embodiment of the invention, the method comprises a step of creating a record entry comprising the function-related request and a result of the predefined validation process in a database of the satellite-based validation system by the satellite-based validation system. In other words, the reception of the function-related request, the function-related request and the outcome of the predefined validation process corresponding to the respective function-related request is logged in the database of the satellite-based validation system. The embodiment has the advantage that it is possible to detect an invalid use of the industrial device.

According to a further embodiment of the invention, the method comprises a step of creating the regulations by a system permission management module of the satellite-based validation system. In other words, the regulations comprising the permissions of the industrial device are generated by the system permission management module of the satellite-based validation system. A next step comprises a sending of an update signal comprising the regulations to the local permission store of the satellite-based validation system by the system permission management module of the satellite-based validation system. In other words, after creation of the regulations, the regulations are sent to the local permission store of the satellite-based validation system by the system permission management module of the satellite-based validation system in an update signal. The update signal is received by the local permission store. A next step comprises a storing of the regulations in the local permission store by the local permission store. The embodiment has the advantage that it is possible to update regulations of the satellite-based validation system.

According to a further embodiment of the invention, the method comprises the steps of: upon denying of the validity of the function-related request sending the response signal comprising a negative response corresponding to the function-related request to the industrial device by the satellite-based validation system. In other words, in case the function-related request is not validated in the predefined validation process, the response signal sent by the satellite-based validation system to the industrial device comprises the negative response. The negative response may comprise a code configured to lock or to end the execution of the particular function by the industrial device. The response signal is received by the industrial device. Upon reading of the negative response by the industrial device, the execution of the particular function by the industrial device is aborted.

A second aspect of the invention is related to an industrial device of a system. The industrial device is configured to send a request signal comprising a function-related request to request an unlocking of a particular function of the industrial device for at least a predetermined period of time to a satellite-based validation system. In other words, the industrial device is configured to execute a particular function. The industrial device requires an unlocking of the particular function in order to execute the particular function. Therefore, in order to execute the particular function, the industrial device is configured to send the request signal to request the unlocking of the particular function to the satellite-based validation system. The industrial device is configured to receive the response signal from the satellite-based validation system. The industrial device is configured to execute the particular function upon reading of the positive response by the industrial device, for at least the predetermined period of time. In other words, the industrial device unlocks the particular function by means of the positive response received by the response signal.

A third aspect of the invention comprises a satellite-based validation system. The satellite-based validation system is configured to receive a request signal comprising a function-related request to request an unlocking of a particular function of an industrial device for at least a predetermined period of time from the industrial device. In other words, the satellite-based validation system is configured to unlock a particular function of an industrial device. The satellite-based validation system is configured to validate the function-related request according to a predefined validation process. In other words, the satellite-based validation system is configured to perform the predefined validation process in order to verify the function-related request of the industrial device. The satellite-based validation system is configured to send a response signal comprising a positive response corresponding to the function-related request to the industrial device upon confirmation of a validity of the function-related request. In other words, the satellite-based validation system is configured to send the positive response to the industrial device when the function-related request is valid.

A fourth aspect of the invention is related to a system comprising the industrial device and the satellite-based validation system.

The industrial device and the satellite-based validation system may comprise computing units to perform steps of the method.

A computing unit may in particular be understood as a data processing device, which comprises processing circuitry. The computing unit may therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,

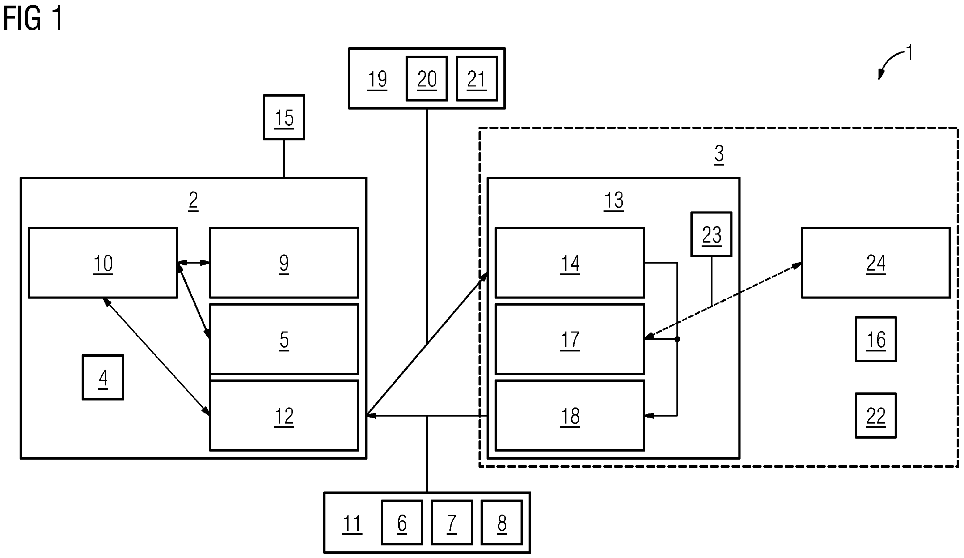

- FIG 1: shows a schematic illustration of a system; and
- FIG 2: shows a schematic illustration of a method.

The system 1 may comprise at least one industrial device 2 and a satellite-based validation system 3. The industrial device 2 may comprise a computing unit 4. The industrial device 2 may be configured to operate at least one particular function 5. It may be possible that the execution of the at least one particular function 5 by the industrial device 2 is limited to certain geographical locations or to certain industrial devices 2. To ensure compliance of the execution of the particular function 5 with the regulations 16, it may be possible that the particular function 5 is locked by default. In other words, it may be possible that the execution of the particular function 5 by the industrial device 2 is not possible by default as the particular function 5 is locked. Therefore, it may be possible to unlock the particular function 5 in order to execute the particular function 5.

In order to unlock the particular function 5, it may be possible that the unlocking of the particular function 5 has to be requested by the industrial device 2. To request the unlocking the particular function 5, the industrial device 2 may generate a function-related request 6. The function-related request 6 may comprise the request to unlock the particular function 5 of the industrial device 2 for at least a predetermined period of time. The function-related request 6 may comprise the particular function 5, a location identifier 7 of the industrial device 2 identifying the geographical location of the industrial device 2 and a device identifier 8 identifying the particular industrial device 2. In order to prevent a manipulation of the device identifier 8 or the location identifier 7, the location identifier 7 and the device identifier 8 may be stored in a secure policy store 9 of the industrial device 2. The industrial device 2 may be configured to extract the location identifier 7 and the device identifier 8 form the secure policy store 9. The industrial device 2 may be configured to send the function-related request 6 in a request signal 11 to the satellite-based validation system 3 by means of a communication module 12.

The satellite-based validation system 3 may comprise one or more satellite units 13. The satellite unit 13 may be configured to receive the request signal 11 from the industrial device 2. The satellite unit 13 may comprise a location estimation module 14 configured to estimate a geographical location 15 of the industrial device 2 based on at least one predefined characteristic of the request signal 11. The satellite-based validation system 3 may be configured to validate whether the function-related request 6 is valid. In other words, the satellite-based validation system 3 is configured to check whether the requested execution of the particular function 5 is allowed according to the regulations. The validity of the function-related request 6 may depend on the regulations 16 that may be stored in a local permission store 17 of the satellite-based validation system 3. The local permission store 17 may be located in each of the satellite units 13. The local permission stores 17 may be designed as secure stores. The satellite-based validation system 3 may comprise an authorization validation module 18 configured to validate the function-related request 6 according to a predefined validation process. The predefined validation process may comprise several steps to validate certain aspects of the function-related request 6.

The validation process may comprise a validation of the geographical location 15 of the industrial device 2 in relation to predefined geographical regulations of regulations 16. The predefined geographical regulations may determine local restrictions on the execution of the particular function 5. The confirmation of the validity of the function-related request 6 requires a compatibility of the geographical location 15 of the execution of the particular function 5 with predefined geographical regulations. The validation process may comprise the validation of the geographical location 15 of the industrial device 2 in relation to predefined geographical regulations regarding the geographical location 15 of the industrial device 2. The confirmation of the validity of the function-related request 6 requires a compatibility of the estimated geographical location 15 of the industrial device 2 with the predefined geographical regulations. The validation process may comprise a validation of the geographical location 15 of the industrial device 2 in relation to the geographical location 15 of the industrial device 2 according to the location identifier 7. In other words, the predefined validation process comprises a validation of the location identifier 7. The confirmation of the validity of the function-related request 6 requires a compatibility of the estimated geographical location 15 with the geographical location 15 of the industrial device 2 according to the location identifier 7. The validation process may also comprise a validation of the device identifier 8. The validation process comprises a validation of the device identifier 8 of the industrial device 2 in relation to predefined device rights. In other words, the predefined validation process comprises a validation of the rights of the device to execute the particular function 5. The confirmation of the validity of the function-related request 6 requires a compatibility of the device identifier 8 with the predefined device rights. The authorization validation module 18 may be configured to send a response signal 19 for responding to the function-related request 6 to the industrial device 2.

The response signal 19 may comprise a positive response 20 or a negative response 21 depending on the outcome of the validation process. In case the function-related request 6 is not valid, the authorization validation module 18 may send a negative response 21 to the industrial device 2 via the response signal 19. In case the request is valid, the authorization validation module 18 may send a positive response 20 to the industrial device 2 via the response signal 19. The communication module 12 of the industrial device 2 may be configured to receive the response signal 19. The industrial device 2 may be configured to unlock the function by means of the positive response 20 and to execute the function for at least a predetermined period of time. Otherwise, the industrial device 2 may lock or abort the execution of the particular function 5.

The system 1 may comprise a database 22. The satellite-based validation system 3 may be configured to create a record entry 23 comprising the function-related request 6 and the result of the predefined validation process in the database 22 of the satellite-based validation system 3. Therefore, it is possible to track the use of particular functions 5. The satellite-based validation system 3 may comprise a system permission management store 24. The system permission management store 24 may be configured to generate regulations 16 and to send the regulations 16 to the local permission stores 17 of the satellite units 13. The sending of the request signal 11 may be performed upon initiation of an execution of the particular function 5 and/or during an execution of the particular function 5 in order to request continuation of the execution of the particular function 5.

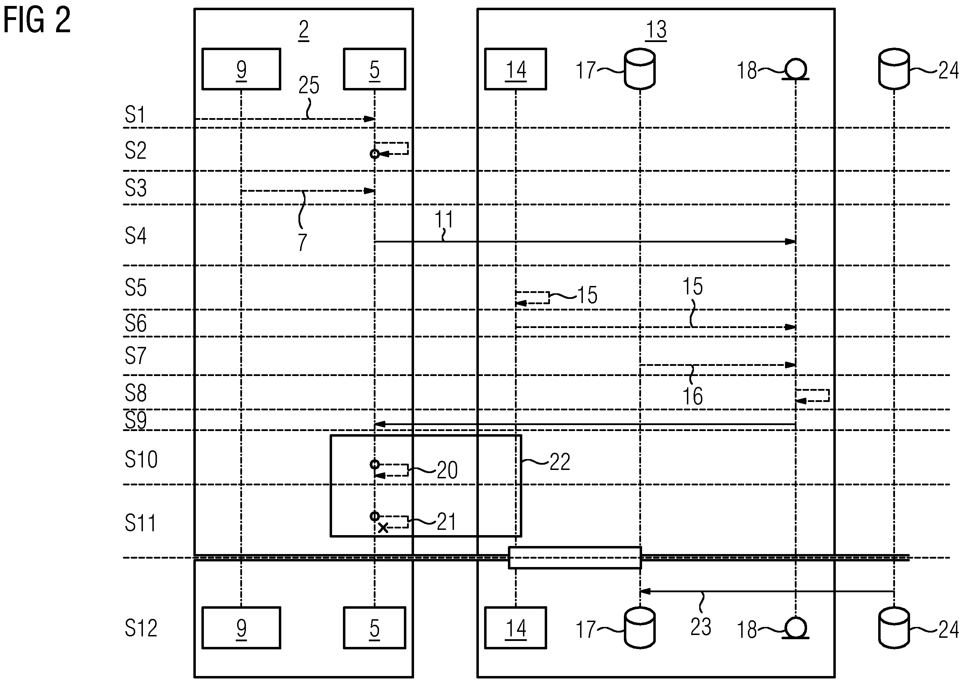

FIG 2 shows a schematic illustration of a method to operate a system.

In a first step S1 of the method, the industrial device 2 may receive a call 25 to initiate an execution of a particular function 5. The industrial device 2 may pause the execution of the particular function 5 in a step S2.

In a step S3, the industrial device 2 may retrieve the location identifier 7 and/or the device identifier 8 from the Secure Policy Store 9 via a device operation system 10 of the industrial device 2.

In a step S4, the industrial device 2 may generate a function-related request 6 to request an unlocking of the particular function 5 of the industrial device 2 for at least a predetermined period of time. The industrial device 2 may send the function-related request 6 via a request signal 11 to the satellite-based validation system 3. The request signal 11 may be received by the satellite-based validation system 3.

The location estimation module 14 of the satellite-based validation system 3 may calculate the geographical location 15 of the industrial device 2 based on a predefined characteristic of the received request signal 11 in a step S5.

An authorization validation module 18 of the satellite-based validation system 3 may perform a predefined validation process to validate the function-related request 6. The authorization validation module 18 may retrieve the geographical location 15 of the industrial device 2 from the location estimation module 14 in a step S6.

In a step S7, the authorization validation module 18 may retrieve local requirements for the request and/or the device from the local permission store 17.

In a step S8, the authorization validation module 18 may validate the function-related request 6 according to the predefined validation process.

In a step S9, the satellite-based validation system 3 may send a response signal 19 to the industrial device 2. The response signal 19 may comprise a positive response 20 in case of a validation of the function-related request 6 or a negative response 21 in case of a negative outcome of the validation process.

In a step S10, the industrial device 2 may read the response signal 19 and continue or initiate the execution of the particular function 5 in case of a positive response 20.

In case of a negative response 21, the industrial device 2 may abort the execution of the particular function 5 in a step 511. It may be possible that a system permission management system 24 of the satellite-based validation system 3 sends an update signal 23 to the satellite-based validation system 3 comprising regulations 16. The satellite-based validation system 3 may receive the update signal 23 and update the regulations 16 stored in the local permission store 17.

A key objective of the proposed system is the continuous technical validation of the industrial device operation in compliance to operation policies defined by contractual agreements. This may be enabled by a secure operation policy storage on the industrial device combined with a satellite-based validation system, also called space-based edge cloud system. The secure policy store on the industrial device may hold information about the device identifier and one or more location identifiers like areas modeled by open location codes, which may be transmitted signed by the industrial device to the space-based edge cloud system (SECS). The SECS, may process the information, and may continuously validate, that the industrial device operates according to the defined polices e.g., in a defined area of operation and may send a positive response as a validation acknowledgment, if the function operation of the industrial device is authorized to continue operation.

The proposed system enables the global operation of a continuous policy compliance validation system and asset management system with low-bandwidth communication demands, which is completely independent from any terrestrial communication infrastructure (e.g., wired or mobile Internet access networks). This is for instance highly valuable for any areas with little or no available IT infrastructure or in any kind of crisis situations. In addition, it allows also to disable/enable functional operation of industrial devices from remote, as the industrial device may only operate in case it continuously gets an operation acknowledgement from the SECS.

The proposed mechanism may use the following components:
The industrial device may have compute and communication capabilities and is hosting industrial functions. To carry out the desired device functionality e.g., controlling a motor, performing analytics, operating an autonomous factory and/or autonomous energy supply system, the industrial device may call the corresponding industrial function.

The secure policy store may be designed as a tamper-proof storage on the industrial device that holds a unique device identifier for the device and a location identifier for the device's location and/or any other policy identifiers considered.

The industrial functions may comprise functions that operate local equipment and require a positive response comprising a policy compliance validation before execution. The validation process may use an interaction between the device and a space-based edge-cloud system.

The space-based edge-cloud system (SECS) may be designed as a satellite system, enabled to communicate to terrestrial systems like ground stations or devices as well as other satellite systems. In addition to communication capabilities, a space-based edge-cloud has also compute resources that can be accessed as shared resource pool.

The location estimation module may be a module located in the SECS that calculates the device location based on the signal characteristics of the received validation request. Thus, the presence of the device and the associated industrial function at the location may be matched with the location identifier submitted by the device in its validation request. This component may provide a space-based method for locating devices or industrial functions globally, independent from local terrestrial equipment.

The local permission store may be a module located in the SECS and is used as primary store for permissions, being used by the authorization validation module. The content of the local permission store may be updated from the system permission management & store component.

The authorization validation module may use the location estimation module and the local permission store component to validate requests from Industrial Functions. An authorization request may be received from an industrial function (containing the device location, the device identifier and a device certificate) and the authorization validation module may use the result from the location estimation component to determine whether the request is received from the correct location for validating the request using the local permission store.

The authorization request may be created by industrial functions and needs to be acknowledged by the SECS in order to proceed with the execution of the industrial function. A negative acknowledgement may result in immediate termination of the industrial function execution. The authorization request contains at least the device location, the device identifier and a device certificate (all retrieved from the secure policy store). In the case no acknowledgment (neither a negative or positive one) is received different kind of rules for this scenario can be applied, e.g., no acknowledgment is treated like a negative acknowledgement and immediate termination of Industrial function is enforced. No acknowledgment may trigger a timer, which manages retries to get acknowledgments and only in case the timer times out without receiving a positive acknowledgment, the Industrial Function will be terminated.

The system permission management & store may be a central management entity and can be located either in the SECS or in terrestrial systems. It has connectivity to the SECS and can update the local permission store in all entities of the SECS. This update process can be done periodically (in case of continuous connectivity between the SECS and the system permission management & store) or asynchronous (no continuous communication between system permission management & store and the SECS).

The secure policy store and the local permission store may be designed tamperproof - standardized mechanism for AAA, certificates and trusted HW-anchors can be used. Policies in the Local permission store may have an expiration date.

The estimated location of the industrial device, together with its signing certificate received from the industrial device may be transmitted back to a device tracking management of e.g., the device builder which allows for extended device management functions (e.g., support, tracing, updates, status monitoring) and advanced automated business functions (e.g., penalty system if devices are not used as legally agreed or changed costs if used in different areas). This advanced business functions might need extensions of the before mentioned validation module.

The system has the following advantages:
- No localization module in the industrial device needed, which would provide a potential target component for manipulation, in industrial device. Instead geographical location may be tracked by the SECS based on the request signal
- Concept simple to integrate based on latest technologies e.g., secure elements in devices, small sized satellite communication systems, LEO satellite constellation.
- Communication demands low, communication signature of mechanism allows even piggy-bag sending in other protocol headers, if global communication is anyway available.
- Mechanism ensures that functionalities of ground (by industrial functions) can be enabled or disabled globally, independent from terrestrial infrastructure.

## Claims

1. Method to operate a system (1), comprising an industrial device (2) and a satellite based validation system (3), comprising the steps of:
- sending a request signal (11), comprising a function-related request (6) to request an unlocking of a particular function (5) of the industrial device (2) for at least a predetermined period of time to the satellite based validation system (3) by the industrial device (2),
- receiving the request signal (11) by the satellite based validation system (3),
- validating the function-related request (6) according to a predefined validation process by the satellite based validation system (3),
- upon confirmation of a validity of the function-related request (6), sending a response signal (19) comprising a positive response (20) corresponding to the function-related request (6), to the industrial device (2) by the satellite based validation system (3),
- receiving the response signal (19) by the industrial device (2), and
- upon reading of the positive response (20) by the industrial device (2), execution of the particular function (5) for at least the predetermined period of time by the industrial device (2).

2. Method according to claim 1, comprising the step of:
- locating a geographical location (15) of the industrial device (2) based on at least one predefined characteristic of the request signal (11) by the satellite based validation system (3).

3. Method according to claim 2, wherein
- the predefined validation process comprises a validation of the geographical location (15) of the industrial device (2) in relation to predefined geographical regulations (16) saved in a local permission store (17) of the satellite based validation system (3), regarding the execution of the particular function (5) by the industrial device (2), and
- the confirmation of the validity of the function-related request (6), requires a compatibility of the geographical location (15) of the execution of the particular function (5) by the industrial device (2) with the predefined geographical regulations (16).

4. Method according to claim 2 or 3, wherein
- the predefined validation process comprises a validation of the geographical location (15) of the industrial device (2) in relation to predefined geographical regulations (16) saved in a local permission store (17) of the satellite based validation system (3), regarding the geographical location (15) of the industrial device (2), and
- the confirmation of the validity of the function-related request (6), requires a compatibility of the estimated geographical location (15) of the industrial device (2) with the predefined geographical regulations (16).

5. Method according to one of the claims 2 to 4, wherein
- the function-related request (6) comprises a location identifier (7) of the industrial device (2) identifying a geographical location of the industrial device (2),
- the predefined validation process comprises a validation of the geographical location (15) of the industrial device (2) in relation to the geographical location (15) of the industrial device (2) according to the location identifier (7), and
- the confirmation of the validity of the function-related request (6), requires a compatibility of the estimated geographical location (15) of the industrial device (2) with the geographical location (15) of the industrial device (2) according to the location identifier (7).

6. Method according to one of the preceding claims, wherein
- the function-related request (6) comprises a device identifier (8) of the industrial device (2) identifying the particular industrial device (2),
- the predefined validation process comprises a validation of the device identifier (8) of the industrial device (2) in relation to predefined device rights of local permission store (17) regarding the device identifier (8) of the industrial device (2), and
- the confirmation of the validity of the function-related request (6), requires a compatibility of the device identifier (8) of the industrial device (2) with the predefined device rights of the device identifier (8) of the industrial device (2).

7. Method according to claim 6, wherein the device identifier (8) of the industrial device (2) is saved in a secure policy store (9) of the industrial device (2).

8. Method according to one of the preceding claims, comprising the steps of:
- repeating the steps according to one of the preceding claims during execution of the function (5) until a predefined task of the execution has finished by the industrial device (2).

9. Method according to one of the preceding claims, comprising the steps of:
- creating a record entry (23) comprising the function-related request (6) and a result of the predefined validation process in a database (22) of the satellite based validation system (3), by the satellite based validation system (3).

10. Method according to one of the preceding claims, comprising the steps of:
- creating the regulations (16) by a system permission management module (24) of the satellite based validation system (3),
- sending an update signal (23) comprising the regulations (16) to the local permission store (17) of the satellite based validation system (3) by the system permission management module (24) of the satellite based validation system (3),
- receiving the update signal (23) by the local permission store (17), and
- storing the regulations (16) in the local permission store (17) by the local permission store (17).

11. Method according to one of the preceding claims, comprising the steps of:
- upon denying of the validity of the function-related request (6), sending the response signal (19) comprising a negative response (21) corresponding to the function-related request (6), to the industrial device (2) by the satellite based validation system (3),
- receiving the response signal (19) by the industrial device (2), and
- upon reading of the negative response (21) by the industrial device (2), aborting the execution of the particular function (5) by the industrial device (2).

12. Industrial device (2) of a system (1), **characterized in that** the industrial device (2) is configured to
- send a request signal (11), comprising a function-related request (6) to request an unlocking of a particular function (5) of the industrial device (2) for at least a predetermined period of time to the satellite based validation system (3),
- receive a response signal (19) from the satellite based validation system (3), and
- execute the particular function (5) upon reading of the positive response (20) by the industrial device (2), for at least the predetermined period of time.

13. Satellite based validation system (3), **characterized in that** the satellite based validation system (3) is configured to
- receive a request signal (11), comprising a function-related request (6) to request an unlocking of a particular function (5) of an industrial device (2) for at least a predetermined period of time from the industrial device (2),
- validate the function-related request (6) according to a predefined validation process, and
- send a response signal (19) comprising a positive response (20) corresponding to the function-related request (6), to the industrial device (2) upon confirmation of a validity of the function-related request (6).

14. System (1) comprising an Industrial device (2) and a satellite based validation system (3).
